# EUROPÄISCHE PATENTANMELDUNG

(11) **EP 0 737 504 A1**
(43) Veröffentlichungstag der Anmeldung: **16.10.1996**
(21) Anmeldenummer: 96104687.7
(22) Anmeldetag: 25.03.1996
(51) Int. Cl.: B01D 46/30, B01D 53/04

(54) **Filterelement**

(30) Priorität: 10.04.1995 DE 19512967
(71) Anmelder: Friatec Aktiengesellschaft Keramik- und Kunststoffwerke, D-68229 Mannheim (DE)
(72) Erfinder: Werner, Roland, 67550 Worms (DE); Cuntz, Hans Peter, 68775 Ketsch (DE); Mühlemeier, Jörg-Florian, 71672 Marbach (DE)
(74) Vertreter: Klose, Hans, Dipl.-Phys.

(57) **Zusammenfassung**

Ein Filterelement, insbesondere eines Abluftfilters besitzt eine Eintrittsöffnung (34) und eine Ausströmöffnung (44) in einem Gehäuse (24), in welchem wenigstens ein Einström-Hohlkörper (42) und wenigstens ein Ausström-Hohlkörper (46) angeordnet sind. Das Gehäuse (24) ist mit einem Deckel (26) verschließbar und zwischen den Hohlkörpern (42, 46) ist eine Kammer (48) mit Filtermasse (28) angeordnet. Bei kompakter Bauweise soll die Filterleistung erhöht und der Druckverlust auf ein Minimum reduziert werden. Es wird vorgeschlagen, die Eintrittsöffnung (34) in einer Frontwand (32) des Gehäuses (24) anzuordnen und die Hohlkörper (42, 46) mit einer Höhe auszubilden, welche um einen vorgegebenen Faktor kleiner ist als die Höhe (35) des Gehäuses (24). Ferner ist oberhalb der Hohlkörper (42, 46) und der Kammern (48) eine durchgehende Schicht (52) der Filtermasse (28) vorgesehen, auf welcher oben der Deckel (26) aufliegt.

## Beschreibung

Die Erfindung bezieht sich auf ein Filterelement, insbesondere Abluftfilter, gemäß den im Oberbegriff des Patentanspruchs 1 angegebenen Merkmalen.

Aus der deutschen Offenlegungsschrift DE 32 39 110 A1 ist ein derartiges Filterelement bekannt, in dessen Gehäuse die Filtermasse mäanderförmig angeordnet ist. In einer Frontwand des Gehäuses ist eine Einströmöffnung vorgesehen, hinter welcher zur gegenüberliegenden und eine Ausströmöffnung enthaltende Rückwand sich verjüngende Einström-Hohlkörper angeordnet sind. Parallel zur Frontwan d betrachtet, sind im Inneren des Gehäuses somit abwechselnd die Einström- und Ausström-Hohlkörper vorgesehen, zwischen welchen die Filtermasse angeordnet ist. Die Rückwand enthält zwischen den Ausströmöffnungen jeweils einen Deckel, welche in einem Rahmen aus Profilen eingebaut sind. Im Inneren des jeweiligen Deckels ist eine Anpreßplatte aus Gummi oder luftdurchlässigem Kunststoff angeordnet, welche dauerelastisch ausgebildet sind und durch Verspannen der Deckel zusammengepreßt sind. Infolge der Pressung wird ein leichter Druck auf die dahinterliegende Filtermasse erzeugt, um deren Homogenität zu verbessern. Die Rückwand weist einen vergleichweise komplexen Aufbau auf und erfordert einen nicht unerheblichen Fertigungs- und Montageaufwand. Der mittels den Anpreßplatten erzeugbare Anpreßdruck ist nur in einer vergleichsweise geringen Bandbreite vorgebbar, wobei seine Wirkung unter praktischen Gegebenheiten auf den Bereich der Ausströmseite begrenzt ist. Es ist nicht auszuschließen, daß aufgrund von zu großen Hohlräumen oder mangelnder Schüttung der insbesondere aus Aktivkohle bestehenden Filtermasse zumindest partiell eine unzureichende Filterung erreicht wird oder Gasdurchbrüche in unzulässiger Weise auftreten. Ferner besteht das Risiko, daß während der Nutzung, insbesondere infolge von äußeren Vibrationen, die Filtermasse vor allem im unteren Teil des Filterelements immer stärker verdichtet wird, während im oberen Teil unzulässige Hohl- oder Zwischenräume sich ausbilden.

Ferner ist aus dem deutschen Gebrauchsmuster gemäß DE 88 05 324 U1 ein Filterelement mit in Strömungsrichtung hintereinander liegende Filterplatten bekannt, welche vom Medium durchströmt werden. Zwischen den Filterplatten sind Zwischenräume vorhanden, welche nur zur Verteilung des Medienstromes dienen und welche nur wenige Milimeter tief sein müssen. Über den Filterplatten bzw. Filterkammern ist eine durchgehende Schicht der Filtermasse angeordnet, welche in die einzelnen Filterkammern gelangen kann. Unterhalb der Filterkammern ist ein mittels eines Handgriffs betätigbarer Schüttelrost vorgesehen, um das in den Filterkammern vorhandene und verbrauchte Filtergranulat in ein darunterliegendes Sammelfach zu schütteln, während gleichzeitig aus dem oberen Vorratsbehälter frisches Filter-Granulat nachrieselt. Für den in der Gebrauchsmusterschrift besonders hervorgehobenen Einsatzzweck als Küchen-Luft-Filter mag eine derartige Ausbildung genügen, doch den höheren Anforderungen zur Filterung von Abgasen, wie es insbesondere an Arbeitsplätzen in Labors der chemischen Industrie der Fall ist, kann das vorbekannte Filterelement nicht ohne weiteres genügen. So besteht vor allem die Gefahr von Gasdurchbrüchen im Bereich des unteren Schüttelrostes und/oder des Sammelfachs. Da die Filterplatten in Strömungsrichtung hintereinander von der Abluft durchströmt werden, sind der Filterwirkung Grenzen gesetzt bzw. es ist mit einem nicht unerheblichen Druckverlust zu rechnen. Ferner wird die Filtermasse nur sehr unvollständig ausgenutzt, da im Bereich der Einströmöffnung sich wesentlich mehr Fremdstoffe in der Filtermasse festsetzen als im Bereich der Abströmöffnung. Um einen unzulässig hohen Druckverlust zu vermeiden, muß daher schon nach vergleichsweise kurzer Zeit die gesamte Filtermasse ausgetauscht werden, selbst wenn ein erheblicher Teil der Filtermasse im Bereich der Ausströmöffnung noch für eine ordnungsgemäße Filterung geeignet wäre.

Hiervon ausgehend liegt der Erfindung die Aufgabe zugrunde, das Filterelement dahingehend weiterzubilden, daß die Funktionssicherheit verbessert wird und eine kompakte Bauweise gewährleistet ist. Die Filterleistung des Filterelements soll erhöht werden und der Druckverlust soll auf ein Minimum reduziert werden. Das Filterelement soll große Anströmflächen und/oder Abströmflächen an der Filtermasse, insbesondere Aktivkohle, aufweisen. Die Fertigung und insbesondere das Füllen des Filterlements mit der Filtermasse soll erleichtert werden. Ferner soll eine lange Lebensdauer gewährleistet sein und/oder die Wirkung der Filterung auch bei einwirkenden Vibrationen praktisch unverändert bleiben.

Die Lösung dieser Aufgabe erfolgt gemäß den kennzeichnenden Merkmalen des Patentanspruchs 1.

Das vorgeschlagene Filterelement zeichnet sich durch eine funktionssichere Konstruktion und durch eine kompakte Bauweise aus. Innerhalb des grundsätzlich quaderförmigen Gehäuses sind im wesentlichen horizontal verlaufende Strömungskanäle vorhanden, welche als pyramidenförmige Hohlkörper ausgebildet sind. Diese Hohlkörper besitzen gasdurchlässige, insbesondere luftdurchlässige, Seitenwände, welche die Trennung zu den die Filtermasse enthaltenden Kammern bilden. In horizontaler Richtung betrachtet, und zwar im wesentlichen quer zur Einströmrichtung und/oder Ausströmrichtung sind abwechselnd die Hohlkörper und die genannten Kammern angeordnet, wobei sämtliche Kammern oben über den Hohlkörper hinweg miteinander in Verbindung stehen. Das Filterelement zeichnet sich ferner durch eine hohe Filterleistung und einen geringen Druckverlust aus. Die insbesondere pyramidenförmigen Hohlkörper erstrecken sich in vertikaler Richtung nicht über die gesamte Höhe des Gehäuses, so daß auch oberhalb der Kammern und der Hohlkörper in einer vorgegebenen Höhe Filtermasse vorhanden ist. Das Gehäuse ist oben mit einem Deckel abgeschlossen, welcher vorzugsweise mittels Federn oder dergleichen, einen vorgebbaren Anpreßdruck von oben auf die Filtermasse ausübt. Der Deckel ist in dem Gehäuse in besonders zweckmäßiger Weise bewegbar und/oder schwimmend angeordnet, so daß problemlos eine Nachstellung durchgeführt werden kann.

Im oberen Teil des Gehäuses ist eine durchgehende Schicht der Filtermasse vorhanden, welche sich also sowohl über die Hohlkörper als auch die einzelnen zwischen den Hohkörpern befindlichen Kammern hinwegerstreckt. Diese Schicht wird mittels des schwimmenden Deckels vorzugsweise unter Federdruck nach untern gepreßt, so daß die Aktivkohle oder allgemein die Filtermases in den einzelnen Kammern verdichtet wird und eventuell während des Betriebs entstehende Hohlräume durch nachgepreßte Filtermasse aufgefüllt werden können. Aufgrund der erfindungsgemäßen Ausbildung können vergleichsweise großzügige Fertigungstoleranzen zugelassen werden, wobei zusätzliche Dichtwerkstoffe entfallen, zumal alle denkbaren Leckstellen jeweils von der Filtermasse berührt und verschlossen werden. Systembedingt ist eine Störung der Filtration der Gase zu keinem Zeitpunkt zu befürchten, selbst unter Einbeziehung von Verschleiß.

Darüber hinaus hat sich die Befüllung und Entleerung als besonders zweckmäßig herausgestellt, daß sämtliche Kammern gemeinsam gefüllt werden und mit der oberen durchgehenden Schicht ohne Schwierigkeiten ein Ausgleich erfolgt. Zum Nachfüllen oder Austausch der Filtermasse muß lediglich der Deckel abgenommen werden, die bisherige Filtermasse gegebenenfalls herausgeschüttet und die neue Filtermasse gleichzeitig in sämtliche Kammern eingefüllt werden, wobei nachfolgend nur noch der schwimmende Deckel befestigt werden muß.

Die Frontwand und/oder die Rückwand enthält neben der Einström- bzw. Ausströmöffnung ein geschlossenes Wandteil, hinter welcher im Inneren des Gehäuses die Filtermasse angeordnet ist. Die Frontwand und/oder die Rückwand enthalten eine durchgehende Platte, insbesondere aus Blech, welche die wenigstens eine Öffnung und das daneben angeordnete geschlossene Wandteil aufweisen. Durch die einteilige Ausbildung der Platte mit den Öffnungen ist ein geringer Konstruktions- und Fertigungsaufwand erzielt. Die Frontwand und die Rückwand sind ebenso wie die Seitenwände und der Boden integrale Bestandteile des Gehäuses, welches oben von dem auf der Filtermasse schwimmend aufliegenden Deckel abgeschlossen ist.

Weiterbildungen und besondere Ausgestaltungen der Erfindung sind in den Unteransprüchen sowie der weiterne Beschreibung angegeben.

Die Erfindung wird nachfolgend anhand der in der Zeichnung dargestellten Ausführungsbeispiele näher erläutert. Es zeigen:
- Fig. 1: eine Prinzipdarstellung mit vier Filterelementen,
- Fig. 2: eine seitliche Ansicht des Filterelements mit einem Filteraufnahmerahmen,
- Fig. 3: eine Ansicht des Filterelements in Blickrichtung III gemäß Fig. 2,
- Fig. 4: schematisch einen Schnitt entlang Schnittlinie IV gemäß Fig. 2,
- Fig. 5: teilweise und vergrößert einen Schnitt entlang Schnittlinie V gemäß Fig. 4,
- Fig. 6: eine Ansicht des Filterelements von der Rückseite in Blickrichtung VI gemäß Fig. 2,
- Fig. 7: eine Prinzipdarstellung der Filterspannvorrichtung,
- Fig. 8: eine Prinzipdarstellung eines Einbau-Gasfilters,
- Fig. 9: eine Prinzipdarstellung eines Beistell-Gasfilters.

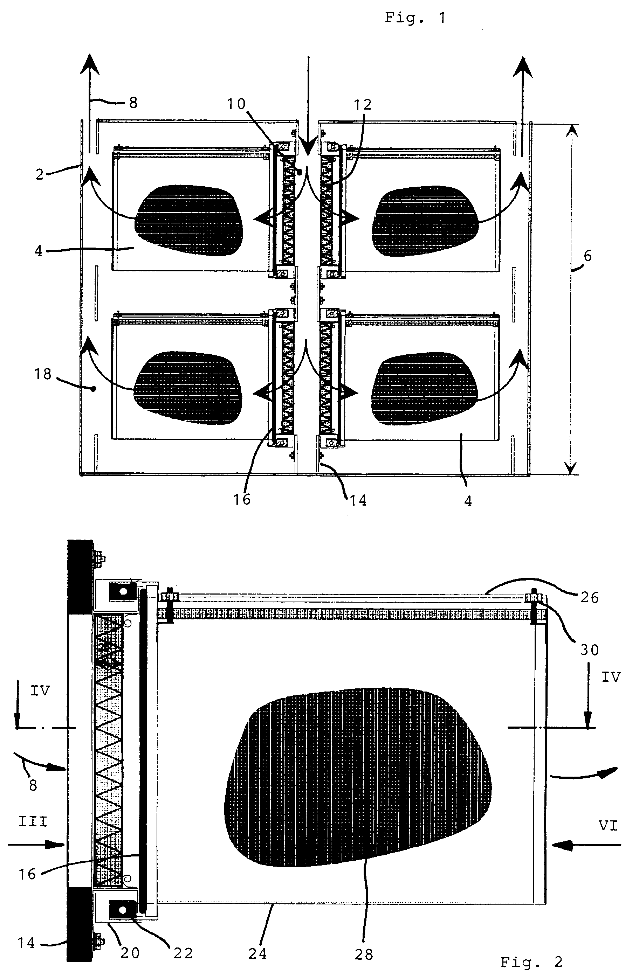

Fig. 1 zeigt in einer Prinzipdarstellung das Gasfilter mit einem Einbaurahmen 2 mit vier Filterelementen 4. Das Gasfilter ist für einen Untertischeinbau ausgebildet und die Gesamthöhe 6 liegt in der Größenordnung von 0,8 m. Mit den Pfeilen 8 ist der Strömungsverlauf des zu reinigenden Gases, und zwar insbesondere der Luft, angedeutet. In der Mitte ist ein gemeinsamer Zuströmkanal 10 für alle Filterelemente 4 vorhanden und von dort strömt das Gas zu beiden Seiten durch die Filterelemente 4, welchen jeweils noch ein Vorfilter 12 für grobe Verunreinigungen vorgeschaltet sind. Die Filterelemente 4 sind an Aufnahmerahmen 14 befestigt, wobei mittels Dichtungen 16 gewährleistet ist, daß aus dem Zuströmkanal 10 das Gas ausschließlich durch die Vorfilter 12 und die Filterelemente 4 strömt. Das gereinigte Gas strömt aus den Filterelementen 4, an deren Rückseite in zwei Abströmkanäle 18 und von dort nach oben aus dem Einbaurahmen 2 heraus.

Aufgrund der erfindungsgemäßen Filterlemente kann das gereinigte Gas bzw. die gereinigte Luft zumindest teilweise auch unmittelbar dem Raum als Umluft wieder zugeführt werden. Die Luft muß also nicht vollständig als Abluft aus dem Labor oder sonstigen Arbeitsraum herausgeführt werden, wodurch nicht zu vernachlässigende Vorteile für die Wirtschaftlichkeit, vor allem im Hinblick auf Heizungskosten, erreicht werden. Die einzelnen Filterelemente 4 sind übereinstimmend als Module ausgebildet und können bei Bedarf problemlos aus dem Aufnahmerahmen 14 herausgenommen und/oder ersetzt werden, wobei mittels einer nachfolgend noch zu erläuternden Filterspannvorrichtung die Filterelemente 4 jeweils in den zugeordneten Aufnahmerahmen 14 eingespannt werden. Bei dieser besonderen Untertisch-Version des Gasfilters ist der zentrale gemeinsame Zuströmkanal 10 zu beiden Seiten jeweils von einem aus identischen Baugruppen aufgebauten Aufnahmerahmen 14 für jeweils zwei Filterelemente 4 begrenzt. Auch die beiden Aufnahmerahmen 14 sind weitgehend übereinstimmend ausgebildet und insgesamt ist das Gasfilter in Modulbauweise aufgebaut, wobei die einzelnen Komponenten einschließlich der Filterelemente 4 problemlos auch anders zusammengesetzt und miteinander kombiniert werden können, wie es nachfolgend noch anhand von weiteren Ausführungsbeispielen erläutert wird.

Fig. 2 zeigt eine seitliche Ansicht des Filterelements 4 mit einer Baugruppe des Aufnahmerahmens 14. Wie in Veribndung mit Fig. 1 ersichtlich, wird aus einer Anzahl von übereinstimmend ausgebildeten Baugruppen des Aufnahmerahmens der gesamte Filteraufnahmerahmen gebildet. Mittels den Pfeilen 8 ist die Strömungsrichtung des zu reinigenden Gases bzw. der Luft angedeutet, wobei gemäß Zeichnung links die Schadluft eintritt und rechts die Reinluft austritt. Jede Baugruppe des Aufnahmerahmens 14 enthält eine Tragschiene 20 und mittels eines Spannsystems 22 ist das Filterelement 4 dicht im Filteraufnahmerahmen 14 einspannbar, wobei mittels der Dichtung 16 eine funktionssichere Abdichtung gewährleistet ist. Das Spannsystem 22 ist in zweckmäßiger Weise als Ziehkeil-Filterspannsystem ausgebildet, welches eine einfache und sichere Befestigung ermöglicht.

Das Filterelement 4 enthält ein quaderförmiges Gehäuse 24, welches oben mit einem Deckel 26 verschlossen ist. Der Deckel 26 liegt schwimmend auf der im Inneren des Gehäuses 24 vorhanden Filtermasse 28 auf, wobei eine Befestigungsvorrichtung 30 vorgesehen ist, welche hier eine federbelastete Deckelverschraubung enhält, um eventuelle Setzungen der Filtermasse und/oder Aktivkohle im laufenden Betrieb auszugleichen. Der Befestigungsvorrichtung 30 sind hier nicht weiter dargestellte Federelemente zugeordnet, welche eine gleichmäßige Krafteinleitung und Verpressung der Filtermasse sicherstellen. Es bedarf wohl keiner besonderen Erwähnung, daß das Gehäuse 24 und der Deckel 26 die Filtermasse 28 dicht umschließen, wobei das Gehäuse 24 auf der Eintrittsseite Öffnungen für das Schadgas und auf der Austrittsseite Öffnungen für das gereinigte Gas enthält.

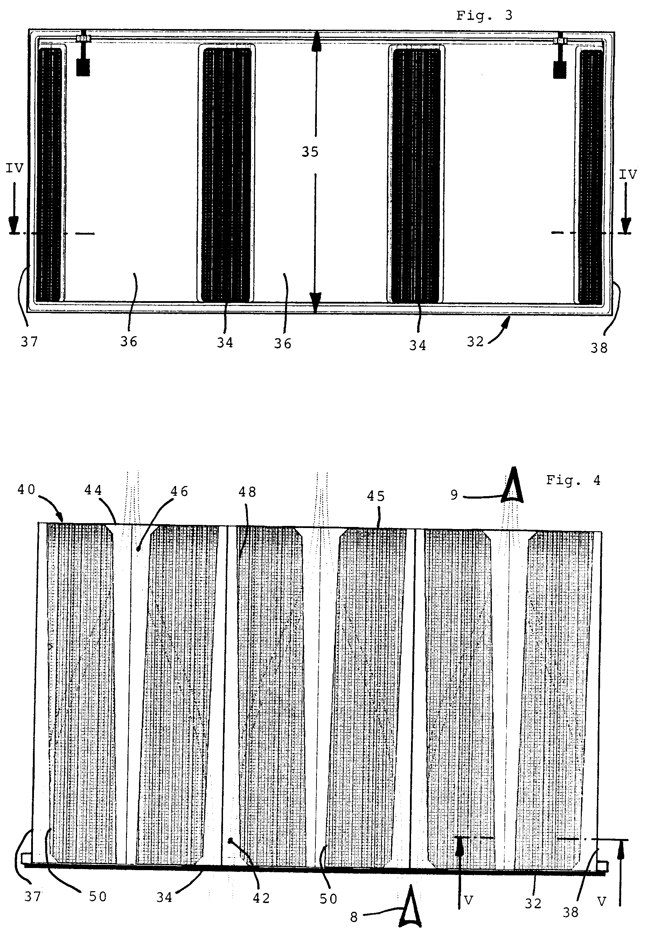

Fig. 3 zeigt eine Ansicht des Filterelements 4 mit einer Frontwand 32, in welcher vier Eintrittsöffnungen 34 vorgesehen sind. Die Eintrittsöffnungen 34 erstrecken sich im wesentlichen über die gesamte Höhe 35 des Filterelements 34, wobei zwischen den Eintrittsöffnungen 34 geschlossene Wandteile 36 vorhanden sind. Die Frontwand 32 des Filtergehäuses ist als eine Platte, insbesondere aus Blech, ausgebildet, in welcher die genannten Eintrittsöffnungen 34 angeordnet sind, wobei zwischen letzteren die geschlossenen Wandteile 36 liegen. Die Frontwand 32 bildet mit Seitenwänden 37, 38, einem Boden 39 sowie einer hinter der Zeichenebene liegenden Rückwand das kastenförmige Gehäuse 24, welches oben offen ausgebildet ist und mit dem erwähnten Deckel verschließbar ist. Die bei dieser Ausführungsform vorhandenen drei geschlossenen Wandteile 36 weisen eine Gesamtfläche auf, welche größer ist als die der vier Eintrittsöffnungen 34. Im oberen Bereich des Gehäuses 24 und/oder der Wandteile 36 sind Teile der Befestigungsvorrichtung 30 zu erkennen.

Fig. 4 zeigt einen Schnitt in einer horizontalen Schnittebene durch das Filterelement 4. Das Filterelement 4 enthält hinter den vier Eintrittsöffnungen 34, durch welche das Gas gemäß den Pfeilen 8 einströmt, von der Frontseite 32 bis zur Rückwand 40 sich erstreckende Hohlkörper 42. Diese Einström-Hohlkörper 42 enden an der Rückwand 40 des Gehäuses. Die Rückwand 40 enthält wiederum über die gesamte Höhe des Filterelements 4 sich erstreckende Ausströmöffnungen 44 für das gereinigte Gas gemäß den Pfeilen 9. Zwischen den Ausströmöffnungen 44 besitzt auch die Rückwand 40 geschlossene Wandteile 45. Den Ausströmöffnungen 44 zugeordnet sind im Inneren des Filterelements Ausström-Hohlkörper 46. In Querrichtung enthält also das Filterelement 4 abwechselnd Einström-Hohlkörper 42 und Ausström-Hohlkörper 46, wobei zwischen diesen die Kammern 48 mit die Filtermasse, welche insbesondere Aktivkohle enthalten, liegen. Im Gehäuse sind parallel zur Frontwand 32 bzw. Rückwand 40 abwechselnd Einström-Hohkörper 42 und Ausström-Hohkörper 46 angeordnet, und diese Hohlkörper 42, 46 erstrecken sich über die gesamte Tiefe des Gehäuses von der Frontwand 32 zur Rückwand 40. Jeder Einström-Hohlkörper 42 endet jeweils am gegenüberliegenden geschlossenen Wandteil 45 der Rückwand 40. Entsprechend beginnt der Ausström-Hohkörper 46 am geschlossenen Wandteil 36 der Frontwand 32 und endet an der Ausströmöffnung 44 der Rückwand 40. Das einströmende Medium muß somit jeweils die gesamte Breite der in den Kammern 48 angeordneten Filtermasse durchströmen, wodurch eine gleichmäßige Beaufschlagung praktisch der gesamten Filterfläche und ein geringer Druckabfall sichergestellt sind.

Wie durch die punktierten Linien angedeutet, durchströmt das zu reinigende Gas die Filtermasse 28, wobei große Anströmflächen bzw. Abströmflächen vorhanden sind. Die Hohlkörper 42, 46 besitzen gasdurchlässige Seitenwände 50, welche vorzugsweise als Lochbleche ausgebildet sind und deren Porung derart vorgegeben ist, daß Granulat-Filtermasse bzw. Aktivkohle, nicht hindurchdringen kann. Die Seitenwände 50 erstrecken sich durchgehend von der Frontseite zur Rückseite und zwar nur über einen vorgegebenen Anteil der Höhe 36 des Filterelements 4. Die Hohlkörper 42, 46 verjüngen sich ausgehend von den jeweiligen Öffnungen zur gegenüberliegenden Wand bin vorzugsweise konisch und/oder pyramidenförmig.

Durch die erfindungsgemäße Ausbildung des Filterelements mit den Hohlkörpern 42, 46 und den dazwischenliegenden Kammern 48 der Filtermasse 28, wobei diese Kammern sich über die gesamte Länge von der Frontseite bis zur Rückseite erstrecken, werden großzügige Fertigungstoleranzen ermöglicht und der Einsatz von Dichtwerkstoffen wird vermieden. Alle denkbaren Leckstellen werden jeweils von der Filtermasse 28 bzw. Aktivkohleschicht berührt und verschlossen. Systembedingt kann eine Störung der Filtration der Gase zu keinem Zeitpunkt und an keiner Stelle eintreten, auch nicht infolge von Verschleiß.

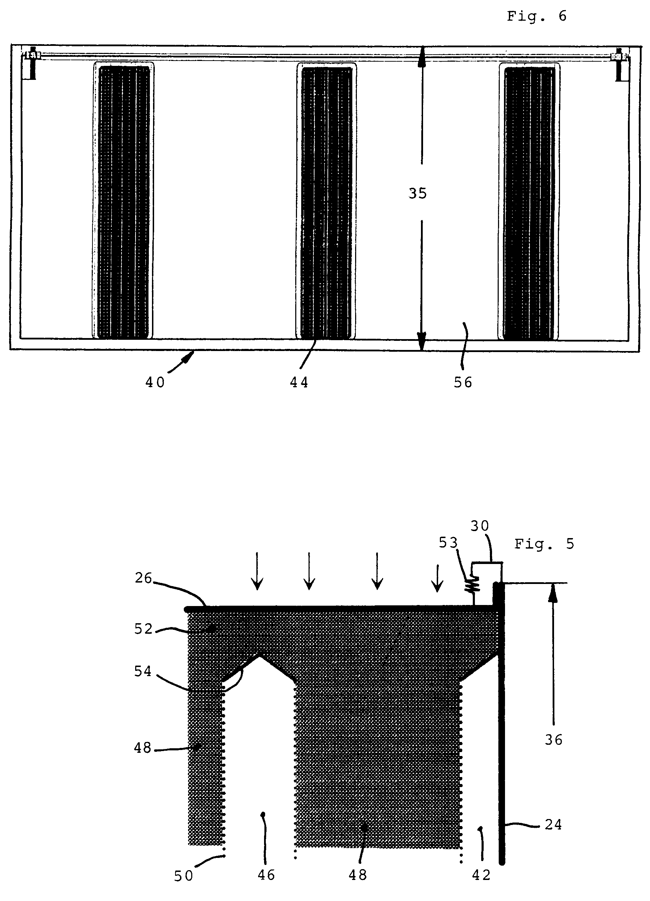

Fig. 5 zeigt teilweise und schmatisch einen Schnitt durch das Filterelement in einer vertikalen Schnittebene. Links neben der vertikalen Wand des Gehäuses 24 ist der äußere Einström-Hohlkörper 42 angeordnet, neben welchem die Kammer 48 mit der Filtermasse 24 und ferner der Ausström-Hohlkörper 46 liegen. Wie bereits erläutert, besitzen die Hohlkörper 42, 46 aus Lochblechen bestehende Seitenwände 50, durch welche hindurch Gas in die Filtermasse 48 bzw. aus dieser herausströmen kann. Die Hohlkörper 42, 46 erstrecken sich erfindungsgemäß nur über einen vorgegebenen Teil der Höhe 36 des Filterelements 4 und über den Hohlkörper 42, 46 ist eine durchgehende Schicht 52 der Filtermasse 28 vorhanden. Oben auf der Filtermasse und insbesondere deren durchgehender Schicht 52 liegt schwimmend der Deckel 26 auf, welcher vorzugsweise mittels Federn 53 vorgespannt ist, so daß ein vorgebbarer Druck auf die Filtermasse 28 wirksam ist. Durch die Vorspannung bzw. Federbelastung werden in zweckmäßiger Weise eventuelle Setzungen oder Filtermasse während des Betriebs ausgeglichen. Bei abgenommenem Deckel 26 kann die Filtermasse problemlos eingefüllt bzw. ausgetauscht werden. Die hier nur schematisch angedeutete Feder 53 ist zweckmäßig in die eingangs erwähnte und hier gleichfalls nur schematisch angedeutete Befestigungsvorrichtung 30 des Deckels 26 integriert.

Die Hohlkörper 42, 46 sind oben mit einem Dach 54, welches insbesondere pyramiden- oder dreieckförmig ausgebildet ist, abgeschlossen. Das Dach 54 könnte beispielsweise auch auch gebogen derart ausgebildet sein, daß die Filtermasse zur Seite zuverlässig in die Kammer 48 geleitet wird. Aufgrund des schwimmend auf der Schicht 42 angeordneten und nach unten gepreßten Deckels 26 wird die Filtermasse bzw. Aktivkohle in den einzelnen Kammern 48 verdichtet und eventuell während des Betriebs entstehende Hohlräume werden durch nachgepreßte Filtermasse aus der durchgehenden Schicht 52 aufgefüllt. Infolge der an der Oberseite der Hohlkörper 42, 46 angeordneten Dächer wird gewährleistet, daß die Filtermasse sicher in die Kammern 48 abgeleitet wird.

Fig. 6 zeigt eine Ansicht der Rückwand 40 mit den drei Ausströmöffnungen 44, welche sich wiederum im wesentlichen über die gesamte Höhe 35 erstrecken. Zwischen den Ausströmöffnungen 44 sind die geschlossenen Wandteile 56 vorhanden, deren Gesamtfläche erheblich größer ist als die der Ausströmöffung 44. Hinter den geschlossenen Wandteilen 56 liegen die Kammern mit der Filtermasse.

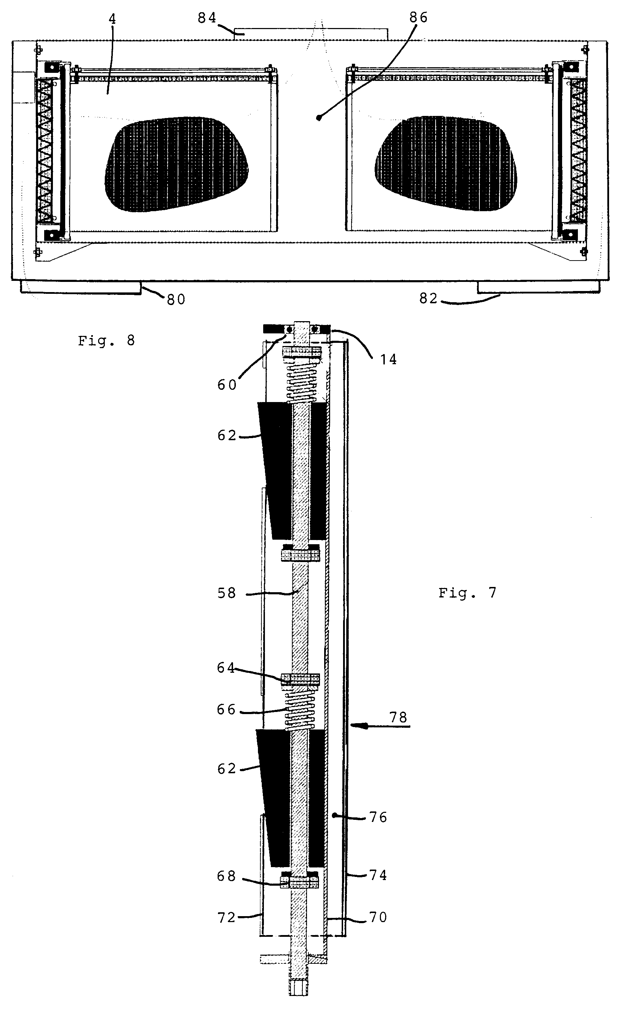

Fig. 7 zeigt in einer Prinzipdarstellung das Filterspannsystem 22 mit enier Gewindestange 58, welche mittels Lagern 60 im hier nicht weiter dargestellten Aufnahmerahmen 14 drehbar gelagert ist. Auf der Gewindestange 58 sind zwei Ziehkeile 62 angeordnet, welche mittels Gewindemuttern 64 beim Drehen der Gewindestange 58 in deren Längsrichtung bewegbar sind. Ferner wirken auf die Ziehkeile 62 Federn 66, so daß die Ziehkeile 62 weitgehend eine Position entsprechend den Gewindescheiben 64 einnehmen, wobei mittels den zwischengeschalteten Federn 66 ein nachgiebiger Ausgleich gewährleistet ist. Mittels Anschlägen 68 ist eine axiale Begrenzung des Verstellweges der Ziehkeile 62 vorgebbar. Die Ziehkeile 62 liegen einerseits an einer Schiene 70 oder dergleichen des Aufnahmerahmens an und andererseits ist im Bereich der Keilflächen eine Klemmleiste 72 in Eingriff. Diese Klemmleiste 72 ist zweckmäßig als U-Profil derart ausgebildet, daß ein Schenkel 74 zur Ablage am Filterelement vorhanden ist. Zwischen dem Schenkel 74 und der Schiene 70 ist eine Klemmzone 76 für das Filterelement vorhanden; wobei die Spannrichtung mittels des Pfeiles 78 angegeben ist.

Fig. 8 zeigt eine Ausführungsform des Gasfilters zum Einbau über einen Laborplatz oder dergleichen mit zwei Filterelementen 4. Das Gasfilter enthält an seiner Unterseite zwei Einströmöffnungen 80, 82 und an seiner Oberseite eine Ausströmöffnung 84. Die beiden Filterelemente 4 sind in der bereits erläuterten Weise jeweils in einem Aufnahmerahmen 14 befestigt, wobei nunmehr in der Mitte der gemeinsame Abströmkanal 86 vorhanden ist. Es sei ausdrücklich darauf hingewiesen, daß auch bei dieser Einbauversion des Gasfilters die gleichen Filterelemente 4 sowie die gleichen Baugruppen des Aufnahmerahmens 14 zum Einsatz gelangen wie bei der eingangs erläuterten Ausführungsform.

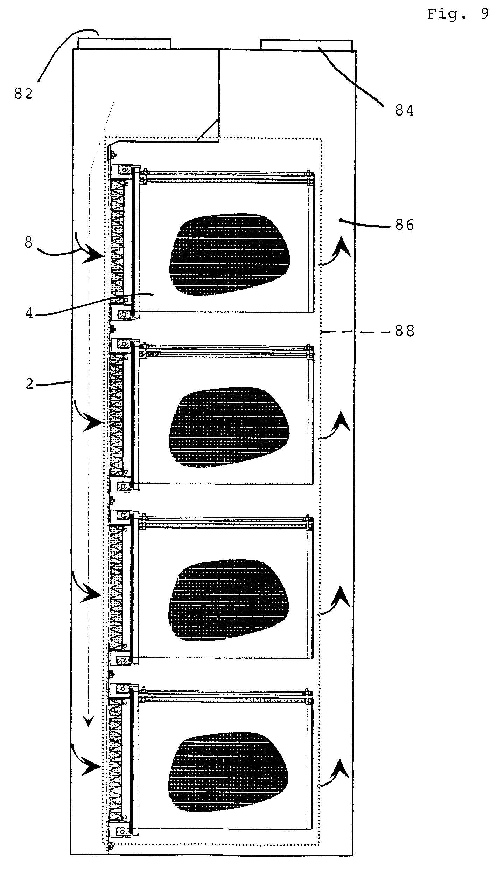

Schließlich zeigt Fig. 9 ein weiteres Ausführungsbeispiel, gemäß welchem das Gasfilter als Beistell-Version augebildet ist, welches oben ein Gehäuse sowohl für die Einströmöffnung 82 als auch die Ausströmöffnung 84 besitzt. Der gesamte Aufnahmerahmen 14 ist aus vier übereinstimmend ausgebildeten Baugruppen zusammengesetzt, welche jeweils das Filterelement 4 in der bereits erläuterten Weise aufnehmen. Mit gestrichelten Linien ist eine Revisionstür 88 des Gehäuses angedeutet, wobei nach Öffnen der Revisionstür die Filterelemente 4 leicht zugänglich sind und bei Bedarf montiert bzw. ausgetauscht werden können.

### Bezugszeichen

- 2: Einbaurahmen
- 4: Filterelement
- 6: Gesamthöhe
- 8, 9: Pfeil
- 10: Zuströmkanal
- 12: Vorfilter / Staubfilter
- 14: Aufnahmerahmen
- 16: Dichtung
- 18: Abströmkanal
- 20: Tragschiene
- 22: Spannsystem
- 24: Gehäuse von 4
- 26: Deckel von 4
- 28: Filtermasse / Aktivkohle
- 30: Befestigungsvorrichtung
- 32: Frontwand
- 34: Eintrittsöffnung
- 35: Höhe
- 36: geschlossener Wandteil von 32
- 37, 38: Seitenwand von 24
- 39: Boden von 24
- 40: Rückwand
- 42: Einström-Hohlkörper
- 44: Ausströmöffnung
- 45: geschlossener Wandteil von 40
- 46: Ausström-Hohlkörper
- 48: Kammer für 28
- 50: Seitenwand von 42, 46
- 52: durchgehende Schicht von 28
- 53: Feder
- 54: Dach von 42, 46
- 56: geschlossenes Wandteil
- 58: Gewindestange
- 60: Lager
- 62: Ziehkeil
- 64: Gewindescheibe
- 66: Druckfeder
- 68: Anschlag
- 70: Schiene
- 72: Klemmschiene
- 74: Schenkel von 72
- 76: Klemmzone
- 78: Pfeil
- 80, 82: Einströmöffnung
- 84: Ausströmöffnung
- 86: Abströmkanal
- 88: Revisionstür

## Patentansprüche

1. Filterelement, insbesondere eines Abluftfilters, mit einem eine Eintrittsöffnung (34) und eine Ausströmöffnung (44) enthaltenden Gehäuse (24), in welchem wenigstens ein der Eintrittsöffnung (34) zugeordneter Einström-Hohlkörper (42) und wenigstens ein der Ausströmöffnung (44) zugeordneter Ausström-Hohlkörper (46) enthalten sind, sowie mit wenigstens einer zwischen den genannten Hohlkörpern (42, 46) angeordneten und Filtermasse (28), vorzugsweise Aktivkohle, enthaltenden Kammer (48), wobei das Gehäuse (24) mit einem Deckel (26) verschließbar ist,
**dadurch gekennzeichnet,** daß die Eintrittsöffnung (34) in einer Frontwand (32) des Gehäuses (24) angeordnet ist, daß der Einström-Hohlkörper (42) und der Ausström-Hohlkörper (46) eine Höhe aufweisen; welche um einen vorgegebenen Faktor kleiner ist als die Höhe (35) des Gehäuses (24), daß oberhalb der Hohlkörper (42, 46) und der Kammern (48) eine durchgehende Schicht (52) der Filtermasse (28) angeordnet ist und daß der Deckel (26) oben auf der durchgehenden Schicht (52) aufliegt.

2. Filterelement nach Anspruch 1, dadurch gekennzeichnet, daß der Deckel (26) auf der Filtermasse (28) unter Vorspannung, vorzugsweise eine Feder (53) aufliegt und/oder daß die zur Federvorspannung vorgesehene Feder (53) Bestandteil einer Befestigungsvorrichtung (30) des Deckels (26) angeordnet ist und/oder daß der Deckel (26) schwimmend auf der durchgehenden Schicht (52) oben aufliegt.

3. Filterelement nach Anspruch 1 oder 2, dadurch gekennzeichnet, daß die Hohlkörper (42, 46) vom Boden (39) des Gehäuses (24) ausgehend sich über einen vorgegebenen Teil der Höhe (35) des Gehäuses nach oben erstrecken und/oder daß die porösen Seitenwände (50) der Hohlkörper (42, 46) im wesentlichen vertikal ausgerichtet sind.

4. Filterelement nach einem der Ansprüche 1 bis 3, dadurch gekennzeichnet, daß die Hohlkörper (42, 46) sich jeweils von der Frontwand (30) durchgehend bis zur Rückwand (40) des Gehäuses (24) erstrecken, wobei der jeweilige Einström-Hohlkörper (42) an einem geschlossenen Wandteil (45) der Rückwand (40) endet und wobei der jeweilige Ausström-Hohlkörper (46) sich von einem geschlossenen Wandteil (45) der Frontwand (40) zur zugeordneten Ausströmöffnung (44) der Rückwand (40) erstreckt.

5. Filterelement nach Anspruch 4, dadurch gekennzeichnet, daß zwischen jeweils zwei Eintrittsöffnungen (34) der Frontwand (32) der jeweilige geschlossene Wandteil (36) angeordnet ist und/oder daß zwischen wenigstens zwei Ausströmöffnungen (44) der Rückwand (40) der geschlossene Wandteil (45) der Rückwand (40) angeordnet ist, wobei hinter jedem der Wandteile (36, 45) im Inneren des Gehäuses eine der Kammern (48) mit der Filtermasse (28) angeordnet ist.

6. Filterelement nach einem der Ansprüche 1 bis 5, dadurch gekennzeichnet, daß die Hohlkörper (42, 46) jeweils von der zugeordneten Eintrittsöffnung (34) oder der Ausströmöffnung (44) sich zur gegenüberliegenden Seite des Gehäuses (24), insbesondere konisch, verjüngen und/oder daß die Hohlkörper (42, 46) pyramidenförmig ausgebildet sind und/oder daß die Hohlkörper (42, 46) oben jeweils mit einem Dach (54) abgeschlossen sind, welches eine geneigte oder gewölbte Kontur derart aufweist, daß Filtermasse (28) in die jeweils daneben angeordnete Kammer (48) ableitbar ist.

7. Filterelement, insbesondere nach einem der Ansprüche 1 bis 6, dadurch gekennzeichnet, daß die Eintröm-Hohlkörper (42) von der Eintrittsöffnung (34) her bis zur Rückwand (40) des Filtergehäuses (24) durchgehend ausgebildet sind und/oder daß die Ausström-Hohlkörper (46) von der jeweiligen Ausströmöffnung (44) sich durchgehend bis zur Frontwand (32) des Filtergehäuses (24) erstrecken.

8. Filterelement, insbesondere nach einem der Ansprüche 1 bis 7, dadurch gekennzeichnet, daß der Deckel (26) mittels einer Befestigungsvorrichtung (30) oben am vorzugsweise kastenförmig und oben offen ausgebildeten Filtergehäuse (24) bewegbar und/oder einstellbar und/oder mittels Federn (53) vorgespannt angeordnet ist.

9. Filterelement nach einem der Ansprüche 1 bis 8, dadurch gekennzeichnet, daß insbesondere an der Frontseite (32) eine Dichtung (16) angeordnet ist mittels welcher eine Abdichtung bezüglich eines Aufnahmerahmens (14) erfolgt, und/oder daß ein Spannsystem (22) vorgesehen ist, mittels welchem das Filterelement (4) im Aufnahmerahmen (14) befestigbar ist.

10. Filterelement, insbesondere nach einem der Ansprüche 1 bis 9, dadurch gekennzeichnet, daß in einem Einbaurahmen (2) eines Gasfilters wenigstens zwei derartige Filterelemente (4) angeordnet sind, wobei jedem Filterelement (4) ein Vorfilter (12) oder Staubfilter vorgeschaltet ist.
